Europäisches Patentamt

(19) European Patent Office

Office européen des brevets

(11) Publication number : **0 444 470 B1**

(12) **EUROPEAN PATENT SPECIFICATION**

(45) Date of publication of patent specification :
27.04.94 Bulletin 94/17

(51) Int. Cl.⁵ : **B01J 23/10, C01F 17/00**

(21) Application number : **91101969.3**

(22) Date of filing : **13.02.91**

(54) **High surface area ceria.**

(30) Priority : **23.02.90 US 484727**

(43) Date of publication of application :
**04.09.91 Bulletin 91/36**

(45) Publication of the grant of the patent :
**27.04.94 Bulletin 94/17**

(84) Designated Contracting States :
**AT BE CH DE DK ES FR GB GR IT LI LU NL SE**

(56) References cited :
**EP-A- 0 207 857**
**FR-A- 2 201 277**
**US-A- 3 892 836**
**US-A- 4 008 254**

(73) Proprietor : **W.R. Grace & Co.-Conn.**
**Grace Plaza, 1114 Avenue of the Americas**
**New York, New York 10036-7794 (US)**

(72) Inventor : **Ashley, Nicole Elise**
**2410 Lincoln Drive East**
**Ambler, Pa. 19002 (US)**
Inventor : **Rieck, Jeffery Scott**
**8049 Round Moon Circle**
**Jessup, Md. 20794 (US)**

(74) Representative : **UEXKÜLL & STOLBERG**
**Patentanwälte**
**Beselerstrasse 4**
**D-22607 Hamburg (DE)**

EP 0 444 470 B1

## Description

1. Field of the Invention

This invention relates to a ceria preparation route which produces thermally stable, high surface area ceria. The ceria can be incorporated into a catalytic washcoat.

2. Description of the Previously Published Art

Automotive three-way catalytic convertors are employed to convert pollutants produced by internal combustion engines into harmless emissions. The catalyst must be highly active for converting CO, NO, and unburned hydrocarbons into nitrogen, carbon dioxide and water over a wide range of exhaust compositions. As a result, a noble metal catalyst which is usually platinum, rhodium, and/or palladium must be employed. To utilize the noble metal most efficiently, they are dispersed on a high surface area support such as gamma alumina (typically having a surface area greater than 150 $m^2$/g). The high surface area support also provides a surface for the deposition of poisons such as lead, zinc, and phosphorus which are usually present in the exhaust gas. Since the catalyst may reach temperatures as high as 1000°C, the support must be thermally stable and resistant to sintering.

The composition of the engine exhaust gas oscillates between net oxidizing (lean) for higher than stoichiometric air/fuel ratios and net reducing (rich) for lower than stoichiometric air/fuel ratios. However, the catalyst operates most efficiently in a stoichiometric exhaust gas. Ceria is commonly added to three-way catalysts to promote the activity of the noble metals under these transient conditions. Ceria serves as an oxygen storage component, since $Ce^{3+}$ can be oxidized to $Ce^{4+}$ under lean conditions; and, similarly, $Ce^{4+}$ can be reduced to $Ce^{3+}$ under rich conditions. In this manner, ceria tends to dampen out oscillations in the exhaust gas stoichiometry.

Ceria may be incorporated into a three-way catalyst washcoat either by impregnation of the high surface area alumina support with a cerium salt or by physically mixing bulk cerium oxide with the other catalyst components. The addition of bulk ceria to the catalyst may be preferable since interactions between impregnated ceria and the alumina support decrease the oxygen storage capacity of the ceria. However, at the extreme temperatures often encountered in catalytic convertors (in excess of 1000°C), ceria rapidly sinters to surface areas of less than 5 $m^2$/g. Therefore, the incorporation of a thermally stable, high surface area ceria would prove beneficial to three-way catalyst performance.

U. S. Patent No. 3,830,756 discusses the importance of using a high surface area ceria support for palladium and platinum oxidation catalysts. Ceria with a purity of 99% was prepared by precipitation of cerium nitrate with ammonium hydroxide at a pH of 9. While the ceria had a high surface area of 218 $m^2$/g after calcination at 427°C for 4 hours in air, the surface area dropped to 4 $m^2$/g following a 4 hour calcination at 982°C.

U. S. Patent No. 4,661,330 discloses a method for preparing high surface area, high purity ceria. Ammonium ceric nitrate is refluxed for 24 hours with ammonium sulfate to obtain a hydrous ceria powder. Following calcination at 538°C in air, this material maintains a surface area of 150 $m^2$/g. However, the stability of this material at higher calcination temperatures was not investigated.

U.S. Patent No. 4,714,694 presents a method for stabilizing the surface area of ceria. A high surface area ceria, calcined at a low temperature, is impregnated with an aluminum salt and calcined. Ceria prepared by this method containing 8 mole % aluminum has a surface area of only 10.5 $m^2$/g following calcination at 1000°C in air.

U.S. Patent 4,859,432 teaches a method for preparing a morphologically improved ceria having high surface area. Ceria is produced by reacting a cerium salt with a strong base in the presence of carboxylate ions followed by calcination. After calcination at 600°C, ceria with a surface area of 177 $m^2$/g was obtained. Higher calcination temperatures were not investigated.

US 4,940,685 corresponding to EP-A-0,207,857 discloses ceric oxide based compositions having included rare earth metals to thermally stabilize the ceria. The La stabilized product disclosed, however, only has a surface of 10 $m^2$/g when heated 6 hours to 900°C (Example 3). This is an increase from the value of 5 $m^2$/g for the untreated ceria (Exp. A). Applicant's composition claims, in contrast thereto, distinguish because they require a surface area of > 20 $m^2$/g when heated to 980°C for four hours in air.

The process to make is also different. The preferred procedure is to impregnate ceria oxide particles with a solution of at least one salt of the metals A defined as "aluminum, silicon, zirconium, thorium and the rare earth metals." This is not applicant's process, where a ceria precursor and a ceria stabilizer precursor are mixed.

According to another production method realized in Example 6 the oxide precursor of a metallic element A is introduced into an aqueous colloidal dispersion of a compound of cerium IV. The mixture is precipitated with ammonia. This process embodiment is different because the starting material is different which is an aqueous colloidal dispersion of a cerium IV compound having a particle size of 310 Å in diameter. This process does not provide the intimate mixture as in the present invention.

In contrast to these poor products of the prior art, the present invention identifies additives and preparation methods for preparing a ceria which maintains a surface area in excess of 20 $m^2/g$ as measured by the Brunauer-Emmett-Teller (BET) method following a calcination at 980°C for 4 hours in air.

3. Objects of the invention

It is an object of this invention to produce a thermally stable, high surface area ceria.

It is further object of this invention to identify additives which increase the surface area of ceria following thermal treatments.

It is further object of this invention to produce a high surface area ceria which is unusualy resistant to sintering.

It is further object of this invention to develop a method by which high surface area ceria may be prepared.

These and further objects will become apparent as the description of the invention proceeds.

Summary of the Invention

Ceria is produced which is unusually resistant to sintering. The addition of rare earths to the ceria during its preparation stabilizes the high surface area ceria which is obtained. For the purposes of this invention, a thermally stable, high surface area ceria is defined as a material which maintains a surface area of over 20 $m^2/g$ as measured by the Brunauer-Emmett-Teller (BET) method following calcination at 980°C in air for at least 4 hours.

In a preferred procedure, a ceria precursor such as cerium nitrate is mixed with a stabilizer precursor compound such as lanthanum, neodymium, or yttrium nitrate and the mixture is dissolved in water.

The precursor mixtures range from 5 to 25 mole % and preferably from 5 to 20 mole % stabilizer (lanthanum, neodymium, or yttrium). The precursor solutions are either evaporated to give a mixed rare earth salt or precipitated at various temperatures and pH with various precipitating agents to precipitate the mixture as a hydroxide or a carbonate. The precipitate may be filtered and washed free of excess salts using water, ammonia in water, methanol, or other solvents. The preparations are then calcined to produce a stabilized ceria.

Description of the Preferred Embodiments

Addition of a stabilizing component to ceria produces a thermally stable, high surface area ceria. The manner in which the stabilizer is incorporated influences the properties of ceria.

Ceria can be prepared by calcination of precursor compounds including cerous acetate, bromide, chloride, iodide, nitrate, or sulfate; ceric sulfate; ammonium cerous sulfate or nitrate; or ammonium ceric sulfate or nitrate. Alternatively, ceria may be prepared by precipitation of hydrous ceric or cerous oxide from aqueous solutions of these precursors with ammonium hydroxide, caustic soda, or other alkali metal hydroxides. The precipitate is then filtered, washed with water, methanol, or another solvent to remove the excess salts, dried, and calcined in air at a temperature in excess of 500°C to produce ceria. Alternatively, cerous or ceric carbonate may be precipitated by addition of ammonium carbonate, sodium carbonate, or other alkali metal carbonates to aqueous solutions of these precursors. The precipitate may then be treated as described above to produce ceria.

High surface area ceria may be produced by incorporating 5 to 25 mole %, preferably 5 to 20 mole % and most preferably about 10 mole %, of lanthanum, yttrium, or neodymium. The preferred composition is to incorporate lanthanum into the ceria. The lanthanum, yttrium, or neodymium precursors used include the acetate, bromate, bromide, chloride, iodide, nitrate, and sulfate salts, preferably the nitrate. The stabilized ceria may be prepared by dissolving the cerium precursor, preferably nitrate, in water with the stabilizer precursor, preferably the nitrate, in the appropriate ratio to give the desired mole % of precursor. The initial concentration of nitrates in the solution is preferably 500 g/l. The aqueous mixture of the cerium salt and the salt of the stabilizer can then be evaporated to produce an intimate mixture of the precursor salts which is then calcined in air at a temperature above 500°C to produce a stabilized ceria.

Alternatively, using the preferred procedure, the aqueous mixture of the precursor salts may be combined with aqueous solutions of ammonium hydroxide, caustic soda, or other alkali metal hydroxides to produce an intimate mixture of the hydrous cerous and stabilizer hydroxides. For this procedure, the initial concentration of the precursor salts may be 10-500 g/l, preferably 100 g/l. The concentration of the precipitating agent may be 1-25 g/100 g of solution and preferably 5 g/100 g of solution. The precipitate is then filtered, washed with water, methanol, or another solvent to remove the excess salts, dried in air at 120°C for 8 hours, and calcined in air at a temperature in excess of 500°C to produce stabilized ceria. Alternatively, the precursors may be precipitated as carbonates by the addition of ammonium carbonate, sodium carbonate, or the carbonates of other alkali metals to the aqueous solution of these precursors. The precipitate may then be washed, dried, and calcined as described above to produce a stabilized ceria.

The precipitation described above may be performed at the ambient temperature, or, preferably, at an elevated temperature, preferably 70-85°C. The precipitation may be performed by adding the solution containing the precipitating agent to a stirred volume of the precursor solution, by adding the precursor solution to a stirred volume of the solution containing the precipitating agent, or, preferably, by simultaneously adding the precursor solution and the solution containing the precipitating agent to a stirred volume of water while maintaining a constant pH between 7 and 10, and preferably 9.

Uniform incorporation of the ceria stabilizer into the ceria precursor to form an intimate mixture prior to calcining the precursor to form the ceria is necessary in order to provide a high surface area ceria. As a result, these preparation methods involving dissolution of precursor compounds so that it can be intimately mixed with the ceria precursor are preferred. Other methods such as impregnation of an already formed crystalline ceria with a stabilizer or mixing and firing of cerium oxides and stabilizer oxides yield inferior materials.

Having described the basic aspects of our invention, the following examples are given to illustrate specific embodiments thereof.

Example 1

This example illustrates the preparation of stabilized ceria by evaporation.

Stabilized ceria containing 10 mole % La and 90 mole % Ce (sample C in Table I) is prepared by adding 45.657 g of cerium nitrate and 5.059 g of lanthanum nitrate to 80 g of water, and the solution is heated until all of the solid has dissolved. Additional water is then added to bring the total volume of the solution to 101 ml (concentration of salts is 500 g/l). The solution is then evaporated to dryness in air, and the resulting solid is calcined in air at 538°C for 1 hour. Using this procedure, cerias containing 0, 5, and 20 mole % La are also prepared (samples A, B, and D in Table I, respectively). The BET surface areas of these materials following calcination in air at 538°C, 760°C, and 980°C for 4 hours are given in Table I.

## Table I

| Sample | La Content Mole % | BET Surface Area $(m^2/g)^a$ | | |
|--------|------|--------|--------|--------|
| | | 538°C | 760°C | 980°C |
| A | 0 | 86 | 30 | 1.4 |
| B | 5 | 59 | 33 | 15 |
| C | 10 | 67 | 35 | 22 |
| D | 20 | 64 | 46 | 20 |

(a)   After calcination at listed temperature for 4 hours.

The date in Table I show that the incorporation of La into ceria greatly improves the thermal stability of ceria. Following calcination at 980°C for 4 hours, ceria containing 10 mole % La has a sixteen-fold higher surface area than unstabilized ceria. In addition, the optimum composition appears to be 10 mole % La with 90 mole % Ce.

Example 2

This example illustrates the preparation of stabilized ceria by precipitation.

Stabilized ceria containing 10 mole % La and 90 mole % Ce (sample F in Table II) is prepared by adding 45.657 g of cerium nitrate and 5.509 g of lanthanum nitrate to 400 g of water, and the solution is heated to 70°C. Additional water is added to bring the total volume to 507 ml (corresponding to a salt concentration of 100 g/l). A solution of 5% $NH_3$ in water is prepared at 25°C. These two solutions are added simultaneously to 500 ml of water that is kept at a constant temperature of 70°C. The nitrate solution is added at a rate of 50 ml/min, and the relative rates of addition are controlled to keep the pH of the solution constant at 9. The resulting precipitate is then filtered, washed with 2 l of deionized water, and dried at 120°C in air for 8 hours. The resulting solid is calcined at 538°C in air for 1 hour. Using this precipitation procedure, a sample containing no La is also prepared (sample E in Table II). A similar procedure, identical to that described with the exception that a precipitation temperature of 85°C is employed, is used to prepare samples containing 0 and 10 mole % La (samples G and H in Table II, respectively). The BET surface areas of these samples following calcination at 980°C in air for 4 hours are given in Table II.

## TABLE II

| Sample | La Content Mole % | T precipitation (°C) | BET Surface Area ($m^2/g$) 980°F |
|--------|-------------------|----------------------|----------------------------------|
| E | 0 | 70 | 5 |
| F | 10 | 70 | 25 |
| G | 0 | 85 | 5 |
| H | 10 | 85 | 34 |

The data in Table II demonstrate a five to seven-fold increase in surface area following calcination at 980°C by the incorporation of La into a ceria during the precipitation process. Furthermore, conducting the precipitation at 85°C instead of 70°C results in further gains in surface area. A comparison of samples G and H in Table II with samples A and C in Table I demonstrates that precipitation is preferred over evaporation as a method for preparing high surface area ceria.

Example 3

This example illustrates the preparation of ceria stabilized by Y and Nd.

Stabilized ceria containing 10 mole % Y and 90 mole % Ce (sample I in Table III) is prepared by adding 47.031 g of cerium nitrate and 4.609 g of yttrium nitrate to 400 g of water, and the solution is heated to 85° C. Additional water is added to bring the total volume to 507 ml (corresponding to a salt concentration of 100 g/l). A solution of 5% $NH_3$ in water is prepared at 25°C. These two solutions are added simultaneously to 500 ml of water that is kept at a constant temperature of 85°C. The nitrate solution is added at a rate of 50 ml/min, and the relative rates of addition are controlled to keep the pH of the solution constant at 9. The resulting precipitate is then filtered, washed with 2 l of deionized water, and dried at 120°C in air for 8 hours. The resulting solid is calcined at 538°C in air for 1 hour. Using this precipitation procedure, a sample containing 10 mole % Nd and 90 mole % Ce is also prepared (sample J in Table III). The BET surface areas of these samples following calcination at 980°C in air for 4 hours are given in Table III.

5

## TABLE III

| Sample | Additive (mole%) | BET Surface Area ($m^2$/g) 980°C |
|---|---|---|
| I | 10% Y | 26 |
| J | 10% Nd | 26 |

Comparison of the results in Table III with samples G and H in Table II demonstrate that incorporation of Y and Nd into ceria greatly improves the thermal stability of ceria. However, La is more effective than Y or Nd at producing a high surface area ceria.

Example 4

This example illustrates the preparation of stabilized ceria with a methanol wash.

Stabilized ceria containing 10 mole % La and 90 Mole % Ce (sample K in Table IV) is prepared by adding 45.657 g of cerium nitrate and 5.059 g of lanthanum nitrate to 400 g of water, and the solution is heated to 85°C. Additional water is added to bring the total volume to 507 ml (corresponding to a salt concentration of 100 g/l). A solution of 5% $NH_3$ in water is prepared at 25°C. These two solutions are added simultaneously to 500 ml of water that is kept at a constant temperature of 85°C. The nitrate solution is added at a rate of 50 ml/min, and the relative rates of addition are controlled to keep the pH of the solution constant at 9. The resulting precipitate is then filtered, washed with 2 l of deionized water, and washed with 500 ml of methanol, and dried at 120°C in air for 8 hours. The resulting solid is calcined at 538°C in air for 1 hour. Using this procedure, a sample containing no La is also prepared (sample L in Table IV). The BET surface areas of these samples following calcination at 980°C in air for 4 hours are given in Table IV.

## TABLE IV

| Sample | La Content (mole%) | BET Surface Area ($m^2$/g) 980°C |
|---|---|---|
| K | 0 | 6 |
| L | 10 | 47 |

Comparison of the results in Table IV with sample H in Table II demonstrates that washing the precipitated stabilized ceria with methanol following the water wash results in further improvements in thermal stability.

Example 5

This example provides a comparison with production of stabilized ceria prepared according to a prior art method.

Ceria is prepared according to the procedure described in U. S. Patent No. 4,661,330 (sample M in Table V). Into 1090 ml of deionized water 37.4 g of ammonium sulfate is dissolved. Into 400 ml of deionized water 426.386 g of ammonium ceric nitrate is dissolved, and the total volume is brought to 610 ml. The ceric solution is added to the ammonium sulfate solution and stirred continuously while heated to boiling. The solution is refluxed for 24 hours. The resulting precipitate is filtered, washed with 2 l of 90°C deionized water, and dried for 8 hours in air at 120°C. The resulting solid is calcined in air at 538°C for 1 hour.

To see the effect of using the preferred stabilizer, La, according to the present invention, a ceria stabilized composition containing 10 mole % La and 90 mole % Ce was prepared by an identical procedure, except that the ceric solution was prepared to contain 383.747 g of ammonium ceric nitrate and 33.678 g of lanthanum nitrate (sample N in Table V) so that the total moles of rare earth would be the same. The BET surface areas of these samples following calcination at 980°C in air for 4 hours are given in Table V.

## TABLE V

| Sample | La Content (mole%) | BET Surface Area ($m^2/g$) 980°C |
|---|---|---|
| M (prior art) | 0 | 5 |
| N (modified prior art) | 10 | 13 |

Although, as reported in U. S. Patent 4,661,330, this method of ceria preparation may produce a high surface area ceria for low calcination temperatures (500°C or less), Table V shows that the ceria does not maintain a high surface area for a calcination temperature of 980°C. Table V also shows that incorporating La (which is a stabilizer preferred in the present patent) is effective at increasing the surface area of ceria prepared according to U.S. Patent No. 4,661,330. However, the superior stabilized ceria according to the present invention having a surface area of greater than 20 $m^2/g$ is not obtained. Thus to prepare a thermally stable high surface area ceria, the precipitation method taught by the present invention is clearly preferred.

## Example 6

This example provides a comparison with a stabilized ceria prepared according to another prior art method.

Ceria stabilized with Al is prepared according to the procedures described in U.S. Patent No. 4,714,694 (sample O in Table VI). Ceria with a purity of 99% and a BET surface area of 120 $m^2/g$ is impregnated with aluminum nitrate to provide a loading of 10 mole % Al with 90 mole % Ce. The sample is dried at 120°C in air for 8 hours and calcined at 538°C in air for 1 hour. Ceria stabilized with La (a stabilizer according to the present invention) containing 10 mole % La and 90 mole % Ce is prepared by an identical procedure, except that ceria is impregnated with La nitrate instead of Al nitrate (sample P in Table VI). The BET surface areas of these samples following calcination at 980°C in air for 4 hours are given in Table VI.

## TABLE VI

| Sample | Additive (mole%) | BET Surface Area ($m^2/g$) 980°C |
|---|---|---|
| O | 10% Al | 8 |
| P | 10% La | 13 |

The results in Table VI show that using La (which is a stabilizer according to the present invention) is preferable to using Al as a stabilizer as taught by U.S. Patent No. 4,714,694. However, the superior stabilized ceria according to the present invention having a surface area greater than 20 $m^2/g$ is not obtained. Thus the precipitation procedure for stabilizer incorporation as taught in the present invention is also preferred to the post impregnation of ceria procedure of U. S. Patent 4,714,694.

Example 7

This example provides a comparison with a stabilized ceria prepared according to a prior art method.

Ceria was prepared according to the procedure described in U. S. Patent No. 4,859,432 (sample Q in Table VII). 1.25 liter of a 5 normal sodium hydroxide solution was prepared and stirred at 500 rpm at 20°C. Over 15 minutes, 397 g of solid cerium acetate was added. The temperature of the mixture was raised to 80°C for 4 hours, and then allowed to cool to room temperature. To this mixture, 95.4 milliliter of a 9.8 molar hydrogen peroxide solution was added. The temperature of the mixture was then raised to 70°C for 1 hour and then cooled to room temperature. The precipitate was filtered and washed twice by suspending the precipitate in water at 100 g of precipitate per liter of water, and a third wash was conducted using a dilute nitric acid solution at pH 5. The solid was then dried at 120°C for 8 hours in air and calcined in air at 538°C for 1 hour.

A sample containing the preferred stabilizer, La, according to the present invention, was prepared by an identical procedure, except that 47.700 g of lanthanum acetate were added simultaneously with the cerium acetate to produce a sample containing 10 mole % La and 90 mole % Ce (sample R in Table VII). The BET surface areas of these samples following calcination at 980°C in air for 4 hours are given in Table VII.

## TABLE VII

| Sample | La Content (mole %) | BET Surface Area $(m^2/g)$ 980°C |
|---|---|---|
| Q (prior art) | 0 | 1 |
| R (modified prior art) | 10 | 7 |

The results in Table VII demonstrate that the procedure reported in U. S. Patent No. 4,859,432 does not produce a thermally stable ceria for a calcination temperature of 980°C, even if La is used to stabilize the ceria. Thus, the precipitation method taught by the present invention is preferred.

## Claims

1. A thermally stable, high surface area ceria composition comprising ceria in an intimate mixture with from 5 to 25 mole% based on the moles of ceria of a ceria stabilizer selected from the group consisting of La, Nd, Y and mixtures thereof obtained from a solution of a ceria precursor and a ceria stabilizer, said composition retaining a BET surface area of greater than 20 m²/g when heated to a temperature of 980°C for four hours in air.

2. A ceria composition according to claim 1, wherein the ceria stabilizer is present from 5 to 20 mole% based on the moles of ceria.

3. A ceria composition according to claim 2, wherein the ceria stabilizer is present in 10% mole based on the moles of ceria.

4. A ceria composition according to claim 1, wherein the ceria stabilizer is La.

5. A ceria composition according to claim 1, wherein the ceria stabilizer is Nd.

6. A ceria composition according to claim 1, wherein the ceria stabilizer is Y.

7. A method of producing thermally stable, high surface area ceria composition comprising the steps:
   (a) mixing a ceria precursor with from 5 to 25 mole% of a ceria stabilizer selected from the group consisting of La, Nd, Y and mixtures thereof to form a solution;

8

(b) forming an intimate mixture of the ceria precursor and the ceria stabilizer by either evaporation of the <u>solution</u> [mixture] of step (a) or precipitation of the <u>solution</u> [mixture] of step (a) as a hydroxide or a carbonate; and

(c) calcining the resulting intimate mixture to obtain stabilized ceria.

8. A method according to claim 7 wherein the ceria stabilizer is added in step (a) in the form of a ceria stabilizer precursor compound.

9. A method according to claim 8, wherein the ceria stabilizer precursor is a salt selected from the group consisting of acetate, bromate, bromide, chloride, iodide, nitrate, sulfate, and mixtures thereof.

10. A method according to claim 7, wherein in step (b) the intimate mixture is formed by evaporation of the mixture.

11. A method according to claim 7, wherein in step (b) the intimate mixture is formed by precipitation of the ceria and ceria stabilizer from precursor compounds as hydroxides or carbonates.

12. A method according to claim 11, wherein the precipitation as hydroxides is performed by adding a solution of ammonium hydroxide, caustic soda, or other alkali metal hydroxides.

13. A method according to claim 11, wherein the precipitation as carbonate is performed by adding a solution of ammonium carbonate, sodium carbonate, or other alkali metal carbonates.

14. A method according to claim 11, wherein the precipitate is filtered and washed free of other salts.

15. A method according to claim 14, wherein the washing is done with water, ammonia in water, methanol or other solvents.

16. A method according to claim 7, wherein the ceria stabilizer is present from 5 to 20 mole% based on the moles of ceria.

17. A method according to claim 16, wherein the ceria stabilizer is present in 10 mole% based on the moles of ceria.

18. A method according to claim 7, wherein the ceria precursor is selected from the group consisting of cerous acetate, cerous bromide, cerous chloride, cerous iodide, cerous nitrate, cerous sulfate, ceric sulfate, ammonium cerous sulfate, ammonium cerous nitrate, ammonium ceric sulfate, ammonium ceric nitrate, and mixtures thereof.

**Patentansprüche**

1. Thermisch beständige, einen großen Oberflächenbereich aufweisende, Ceroxid in einem innigen Gemisch mit 5 bis 25 Mol.-%, bezogen auf die Mole an Ceroxid, eines Ceroxid-Stabilisators ausgewählt aus der Gruppe bestehend aus La, Nd, Y und Mischungen derselben enthaltende Ceroxidzusammensetzung, <u>die aus einer Lösung eines Ceroxidvorläufers und eines Ceroxidstabilisators</u> erhalten worden ist, wobei die Zusammensetzung einen größeren BET-Oberflächenbereich als 20 m$^2$/g beibehält, wenn man sie in Luft 4 Stunden lang auf eine Temperatur von 980°C erhitzt.

2. Ceroxidzusammensetzung nach Anspruch 1, in welcher der Ceroxidstabilisator zu 5 bis 20 Mol.-%, bezogen auf die Mole an Ceroxid, anwesend ist.

3. Ceroxidzusammensetzung nach Anspruch 2, in welcher der Ceroxidstabilisator zu 10 Mol.-%, bezogen auf die Mole an Ceroxid, anwesend ist.

4. Ceroxidzusammensetzung nach Anspruch 1, in welcher der Ceroxidstabilisator La ist.

5. Ceroxidzusammensetzung nach Anspruch 1, in welcher der Ceroxidstabilisator Nd ist.

6. Ceroxidzusammensetzung nach Anspruch 1, in welcher der Ceroxidstabilisator Y ist.

**7.** Verfahren zum Herstellen einer thermisch beständigen, einen großen Oberflächenbereich aufweisenden Ceroxidzusammensetzung mit den Stufen:

(a) Vermischen eines Ceroxidvorläufers mit 5 bis 25 Mol.-% eines Ceroxidstabilisators ausgewählt aus der Gruppe bestehend aus La, Nd, Y und Mischungen derselben zur Bildung einer Lösung;

(b) Bilden eines innigen Gemischs aus dem Ceroxidvorläufer und dem Ceroxidstabilisator entweder durch Eindampfen der Lösung [Mischung] von Stufe (a) oder Ausfällen aus der Lösung [Mischung] von Stufe (a) als ein Hydroxid oder ein Carbonat; und

(c) Calcinieren des resultierenden innigen Gemischs zur Gewinnung von stabilisiertem Ceroxid.

**8.** Verfahren nach Anspruch 7, in welchem der Ceroxidstabilisator in Stufe (a) in der Form einer Ceroxidstabilisatorvorläuferverbindung zugegeben wird.

**9.** Verfahren nach Anspruch 8, in welchem der Ceroxidstabilisatorvorläufer ein Salz ausgewählt aus der Gruppe bestehend aus Acetat, Bromat, Bromid, Chlorid, Jodid, Nitrat, Sulfat und Mischungen derselben ist.

**10.** Verfahren nach Anspruch 7, in welchem in Stufe (b) das innige Gemisch durch Eindampfen der Mischung gebildet wird.

**11.** Verfahren nach Anspruch 7, in welchem in Stufe (b) das innige Gemisch durch Ausfällen des Ceroxids und Ceroxidstabilisators aus Vorläuferverbindungen als Hydroxide oder Carbonate gebildet wird.

**12.** Verfahren nach Anspruch 11, in welchem das Ausfällen als Hydroxide erfolgt, indem man eine Lösung von Ammoniumhydroxid, kaustischer Soda, oder anderen Alkalimetallhydroxiden zusetzt.

**13.** Verfahren nach Anspruch 11, in welchem das Ausfällen als Carbonate erfolgt, indem man eine Lösung von Ammoniumcarbonat, Natriumcarbonat oder anderen Alkalimetallcarbonaten zusetzt.

**14.** Verfahren nach Anspruch 11, in welchem der Niederschlag abfiltriert und von anderen Salzen frei gewaschen wird.

**15.** Verfahren nach Anspruch 14, in welchem das Waschen mit Wasser, Ammoniak in Wasser, Methanol oder anderen Lösungsmitteln durchgeführt wird.

**16.** Verfahren nach Anspruch 7, in welchem der Ceroxidstabilisator, bezogen auf die Mole an Ceroxid, zu 5 bis 20 Mol.-% anwesend ist.

**17.** Verfahren nach Anspruch 16, in welchem der Ceroxidstabilisator, bezogen auf die Mole an Ceroxid, zu 10 Mol.-% anwesend ist.

**18.** Verfahren nach Anspruch 7, in welchem der Ceroxidvorläufer ausgewählt ist aus der Gruppe bestehend aus Ceroacetat, Cerobromid, Cerochlorid, Cerojodid, Ceronitrat, Cerosulfat, Cerisulfat, Ammoniumcerosulfat, Ammoniumceronitrat, Ammoniumcerisulfat, Ammoniumcerinitrat und Mischungen derselben.

## Revendications

**1.** Composition d'oxyde de cérium thermiquement stable et de grande aire superficielle, comprenant de l'oxyde de cérium en mélange intime avec 5 à 25% en moles, en se basant sur les moles d'oxyde de cérium, d'un stabilisant d'oxyde de cérium choisi dans le groupe consistant en La, Nd, Y et leurs mélanges que l'on obtient d'une solution d'un précurseur d'oxyde de cérium et d'un stabilisant d'oxyde de cérium, ladite composition conservant une aire superficielle BET de plus de 10 $m^2$/g lorsqu'elle est chauffée à une température de 980°C pendant quatre heures à l'air.

**2.** Composition d'oxyde de cérium selon la revendication 1, où le stabilisant d'oxyde de cérium est présent à raison de 5 à 20% en moles en se basant sur les moles d'oxyde de cérium.

**3.** Composition d'oxyde de cérium selon la revendication Z, où le stabilisant d'oxyde de cérium est présent à raison de 10% en moles en se basant sur les moles d'oxyde de cérium.

4. Composition d'oxyde de cérium selon la revendication 1, où le stabilisant d'oxyde de cérium est La.

5. Composition d'oxyde de cérium selon la revendication 1, où le stabilisant d'oxyde de cérium est Nd.

6. Composition d'oxyde de cérium selon la revendication 1, où le stabilisant de cérium est Y.

7. Méthode de production d'une composition d'oxyde de cérium de grande aire superficielle, thermiquement stable, comprenant les étapes de :
   (a) mélanger un précurseur d'oxyde de cérium avec 5 à 25% en moles d'un stabilisant d'oxyde de cérium choisi dans le groupe consistant d'oxyde de cérium choisi dans le groupe consistant en La, Nd, Y et leurs mélanges pour former une solution ;
   (b) former un mélange intime du précurseur d'oxyde de cérium et du stabilisant d'oxyde de cérium par évaporation de la solution [mélange] de l'étape (a) ou précipitation de la solution [mélange] de l'étage (a) sous la forme d'un hydroxyde ou d'un carbonate ; et
   (c) calciner le mélange intime résultant pour obtenir de l'oxyde de cérium stabilisé.

8. Méthode selon la revendication 7, où le stabilisant d'oxyde de cérium est ajouté à l'étape (a) sous la forme d'un composé précurseur de stabilisant d'oxyde de cérium.

9. Méthode selon la revendication 8, où le précurseur du stabilisant d'oxyde de cérium est un sel choisi dans le groupe consistant en acétate, chromate, bromure, chlorure, iodure, nitrate, sulfate et leurs mélanges.

10. Méthode selon la revendication 1, où, à l'étape (b), le mélange intime est formé par évaporation du mélange.

11. Méthode selon la revendication 7, où, à l'étape (b), le mélange intime est formé par précipitation de l'oxyde de cérium et du stabilisant d'oxyde de cérium, des composés précurseurs sous la forme d'hydroxydes ou de carbonates.

12. Méthode selon la revendication 11, où la précipitation sous la forme d'hydroxydes est accomplie par addition d'une solution d'hydroxyde d'ammonium, de soude caustique ou autres hydroxydes de métaux alcalins.

13. Méthode selon la revendication 11, où la précipitation sous la forme de carbonate est accomplie par addition d'une solution de carbonate d'ammonium, carbonate de sodium ou autres carbonates de métaux alcalins.

14. Méthode selon la revendication 11, où le précipité est filtré et lavé pour le débarrasser des autres sels.

15. Méthode selon la revendication 14, où le lavage s'effectue à l'eau, à l'ammoniac dans l'eau, au méthanol ou d'autres solvants.

16. Méthode selon la revendication 7, où le stabilisant d'oxyde de cérium est présent à raison de 5 à 20% en moles, en se basant sur les moles d'oxyde de cérium.

17. Méthode selon la revendication 16, où le stabilisant d'oxyde de cérium est présent à raison de 10% en moles en se basant sur les moles d'oxyde de cérium.

18. Méthode selon la revendication 7, où le précurseur d'oxyde de cérium est choisi dans le groupe consistant en acétate céreux, bromure céreux, chlorure céreux, iodure céreux, nitrate céreux, sulfate céreux, sulfate cérique, sulfate céreux d'ammonium, nitrate céreux d'ammonium, sulfate cérique d'ammonium, nitrate cérique d'ammonium et leurs mélanges.